# EUROPEAN PATENT SPECIFICATION

(11) **EP 2 709 407 B1**
(45) Date of publication and mention of the grant of the patent: **10.04.2019**
(21) Application number: 12782406.8
(22) Date of filing: 11.05.2012
(51) Int. Cl.: H04W 52/02, H04W 92/04

(54) **COMMUNICATION SYSTEM, MANAGEMENT DEVICE, CONTROL METHOD, AND PROGRAM**
KOMMUNIKATIONSSYSTEM, VERWALTUNGSVORRICHTUNG, STEUERVERFAHREN UND PROGRAMM
SYSTÈME DE COMMUNICATIONS, DISPOSITIF DE GESTION, PROCÉDÉ DE COMMANDE ET PROGRAMME

(30) Priority: 11.05.2011 JP 2011106015
(43) Date of publication of application: 19.03.2014
(73) Proprietor: NEC Corporation, Tokyo 108-8001 (JP)
(72) Inventor: AKIYOSHI, Ippei, Tokyo 108-8001 (JP)
(74) Representative: Reeve, Nicholas Edward
(86) International application number: PCT/JP2012/062119
(87) International publication number: WO 2012/153834

(56) References cited:
- EP-A1- 2 244 508
- WO-A1-2009/150750
- JP-A- 2008 109 423
- US-A1- 2009 034 443
- US-A1- 2010 284 287

## Description

### TECHNICAL FIELD

The present invention relates to a communication system, a management apparatus, a control method, and a program. In particular, it relates to: a communication system including apparatuses capable of changing operation modes relating to energy consumption; a management apparatus; a control method; and a program.

### BACKGROUND OF THE INVENTION

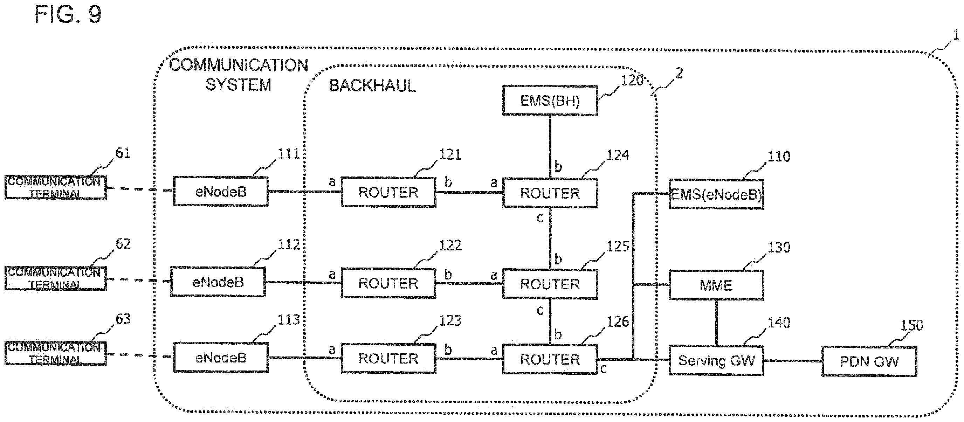

3GPP TS 23.401 V10.3.0 "General Packet Radio Service (GPRS) enhancements for Evolved Universal Terrestrial Radio Access Network (E-UTRAN) access," [online], [searched on April 14, 2011], Internet <http://www.3gpp.org/ftp/Specs/html-info/23401.htm> discloses an example of a conventional communication system. As illustrated in Fig. 9, this conventional communication system 1 includes a backhaul 2, an Equipment Management Server for eNodeBs (hereinafter referred to as "an EMS(eNodeB)") 110, E-UTRAN NodeBs (hereinafter referred to as "eNodeBs") 111 to 113, a Mobility Management Entity (hereinafter referred to as "an MME") 130, a Serving Gateway (hereinafter referred to as "a Serving GW") 140, and a Packet Data Network Gateway (hereinafter referred to as "a PDN GW") 150. In addition, the backhaul 2 includes routers 121 to 126 and an EMS (hereinafter referred to as "an EMS(BH)) 120 managing these routers. In Fig. 9, lower case letters alphabets attached to the routers are identifiers for identifying corresponding interfaces. In addition, in Fig. 9, some pairs of the components in the conventional system are connected by solid lines while other pairs are connected by dashed lines. The dashed lines indicate wireless connection and the solid lines indicate wired connection.

The EMS(eNodeB) 110 manages the eNodeBs 111 to 113. For example, the EMS(eNodeB) 110 includes: a function of setting eNodeBs when a new eNodeB is installed; a function of monitoring the number of communication terminals connected to each eNodeB or the traffic amount flowing through each eNodeB; a function of managing the coverage area of each eNodeB; and a function of changing an operation mode of an eNodeB (between an energy saving mode (power saving mode) and a non energy saving mode (non-power saving mode)).

Each of the eNodeBs 111 to 113 is a radio access apparatus for providing communication terminals with connectivity to the communication system 1 by using a radio access method called Long Term Evolution (LTE).

The EMS(BH) 120 manages the routers 121 to 126. For example, the EMS(BH) 120 includes a function of setting a newly installed router and a function of changing a path in accordance with traffic change or failure.

Each of the routers 121 to 126 is a packet forwarding apparatus for performing packet forwarding in accordance with the destination IP address of a received IP packet.

The MME 130 is a control apparatus for performing control operations so that the communication terminals receive mobile services via the eNodeBs. Examples of such control operations include an authentication operation and a handover operation between eNodeBs.

The Serving GW 140 is an access GW apparatus for providing a bearer serving as a communication path in which communication terminals perform data communication. The Serving GW 140 establishes a packet forwarding tunnel with an eNodeB and the PDN GW.

The PDN GW 150 is a mobile anchor apparatus terminating a bearer serving as a communication path in which communication terminals perform packet communication. To provide the bearer, the PDN GW 150 establishes a packet forwarding tunnel with the Serving GW.

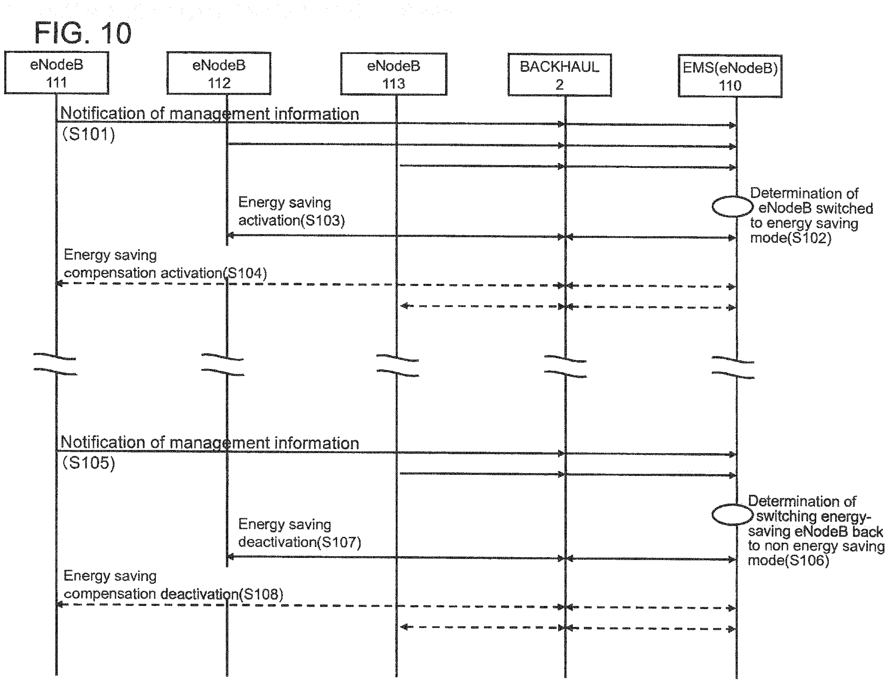

Fig. 10 illustrates an operation in which the EMS(eNodeB) 110 in the communication system 1 in Fig. 9 detects a traffic decrease and causes the eNodeB 112 to switch to the energy saving mode. While the expression "energy saving mode" is used herein, an operation of entirely or partially stopping power supply to an eNodeB is assumed. For example, power supply to an antenna of an eNodeB is stopped or at least one of a plurality of DSPs (Digital Signal Processors) of an eNodeB is stopped. In addition, dashed lines in Fig. 10 indicate operations performed as needed.

In Fig. 10, the EMS(eNodeB) 110 regularly acquires information stored by the eNodeBs from the eNodeBs 111 to 113 (S101). The information includes the number of communication terminals connected to each eNodeB, the traffic amount flowing through each eNodeB, and the strengths of radio waves received from neighboring eNodeBs, for example.

After acquiring the above information from the eNodeBs 111 to 113, the EMS(eNodeB) 110 detects a decrease in the traffic amount flowing through the communication system 1. Next, the EMS(eNodeB) 110 determines which eNodeB needs to be switched to the energy saving mode, based on the coverage area of each eNodeB and the traffic amount flowing through each eNodeB (S102). In this example, the EMS(eNodeB) 110 determines that the eNodeB 112 needs to be switched to the energy saving mode.

Next, to switch the eNodeB 112 to the energy saving mode, the EMS(eNodeB) 110 performs a step for Energy saving activation (S103). If switching the eNodeB 112 to the energy saving mode causes a hole in the coverage area, Energy saving compensation activation may be performed to change the transmission power of the eNodeBs 111 and 113, which are neighboring eNodeBs of the eNodeB 112 (S104).

If the step for Energy saving activation is performed, the eNodeB 112 is switched to the energy saving mode. When the step for Energy saving activation is performed, if any communication terminal connected to the eNodeB 112 exists, the eNodeB 112 hands over such communication terminal to a neighboring eNodeB.

Next, based on information acquired from the eNodeBs 111 and 113 (S105), the EMS(eNodeB) 110 detects an increase in the traffic amount flowing through the communication system 1. Next, the EMS(eNodeB) 110 determines that the energy-saving eNodeB 112 needs to be switched back to the non energy saving mode (S106).

Next, the EMS(eNodeB) 110 performs a step for Energy saving deactivation, to switch the eNodeB 112 back to the non energy saving mode (S107). When the eNodeB 112 is switched to the energy saving mode, if Energy saving compensation activation is being performed, Energy saving compensation deactivation is performed to set the transmission power of the eNodeBs 111 and 113, which are neighboring eNodeBs of the eNodeB 112, back to the respective normal levels (S108).

The first problem with the above background art is that energy is wastefully consumed by a apparatus(es) in the backhaul. This is because control of the eNodeBs and control of the backhaul are not coordinated. Namely, if an eNodeB is switched to the energy saving mode, a packet forwarding apparatus such as a router that has been providing the eNodeB with connectivity is not temporarily used. However, according to the above background art, such packet forwarding apparatus consumes the same amount of energy as it does when used.

EP2244508 discusses a method for activating a power save mode in a first network comprising a femtocell. US 2010/284287 discloses access and packet forwarding apparatus of a telecommunication network. However the operation modes of the routing apparatuses is not changed based on the power operation mode of the access devices.

We have appreciated that it would be desirable to provide a communication system, a management apparatus, a control method, and a program capable of preventing excess energy consumption within a backhaul.

### SUMMARY OF THE INVENTION

According to a first aspect of the present invention, there is provided a communication system, comprising: an access apparatus(es) accessed by communication terminals; a packet forwarding apparatus(es) forwarding packets according to a packet handling rule via the access apparatus(es); a first management apparatus controlling operation modes relating to energy consumption of the access apparatus(es); and a second management apparatus setting the packet handling rule to the packet forwarding apparatus(es), controlling operation modes relating to energy consumption of the packet forwarding apparatus(es) based on a change of the operation modes relating to the energy consumption of the access apparatus(es).

According to a second aspect of the present invention, there is provided a first management apparatus arranged in the communication system, wherein the first management apparatus is configured to control operation modes relating to energy consumption of the access apparatus(es), and cause the second management apparatus, setting the packet handling rule to the packet forwarding apparatus, to control operation modes relating to energy consumption of the packet forwarding apparatus(es) based on a change of the operation modes relating to the energy consumption of the access apparatus(es). With this configuration, energy saving of the packet forwarding apparatus(es) can be controlled in conjunction with energy saving of the access apparatus(es).

According to a third aspect of the present invention, there is provided a second management apparatus, arranged in the communication system, wherein the second management apparatus is configured to control operation modes relating to energy consumption of the access apparatus(es), and controlling operation modes relating to energy consumption of the packet forwarding apparatus(es) based on a change of the operation modes relating to the energy consumption of the access apparatus.

According to a fourth aspect of the present invention, there is provided a control method of operation modes of an access apparatus(es) accessed by communication terminals and of a packet forwarding apparatus(es) forwarding packets according to a packet handling rule via the access apparatus(es) included in a communication system, the control method comprising steps of: controlling operation modes relating to energy consumption of the access apparatus(es); and controlling operation modes relating to energy consumption of the packet forwarding apparatus(es) based on a change of the operation modes relating to the energy consumption of the access apparatus(es). This method is associated with certain machines, namely, with management apparatus controlling the access apparatus(es) and the packet forwarding apparatus(es) in the communication system.

According to a fifth aspect of the present invention, there is provided a program, causing a computer managing an access apparatus(es) accessed by communication terminals and a packet forwarding apparatus(es) forwarding packets according to a packet handling rule via the access apparatus(es) included in a communication system to execute processes of: controlling operation modes relating to energy consumption of the access apparatus(es); and controlling operation modes relating to energy consumption of the packet forwarding apparatus(es) based on a change of the operation modes relating to the energy consumption of the access apparatus(es). This program can be recorded in a computer-readable storage medium. Namely, the present invention can be embodied as a computer program product.

According to the present invention, excess energy consumption within a backhaul can be prevented.

### BRIEF DESCRIPTION OF THE DRAWINGS

Fig. 1 illustrates an outline of the present invention.
Fig. 2 is a block diagram illustrating a configuration according to a first exemplary embodiment of the present invention.
Fig. 3 is a block diagram illustrating a configuration of an access apparatus management apparatus according to the first exemplary embodiment of the present invention.
Fig. 4 is a block diagram illustrating a configuration of a packet forwarding apparatus management apparatus according to the first exemplary embodiment of the present invention.
Fig. 5 is a sequence diagram illustrating an operation according to the first exemplary embodiment of the present invention.
Fig. 6 is a sequence diagram that follows Fig. 5.
Fig. 7 is a block diagram illustrating a configuration according to a second exemplary embodiment of the present invention.
Fig. 8 is a sequence diagram illustrating an operation according to the second exemplary embodiment of the present invention.
Fig. 9 is a block diagram illustrating a configuration of a communication system described in the Background section.
Fig. 10 is a sequence diagram illustrating an operation of the communication system described in the Background section.

### DETAILED DESCRIPTION OF EXAMPLE EMBODIMENTS

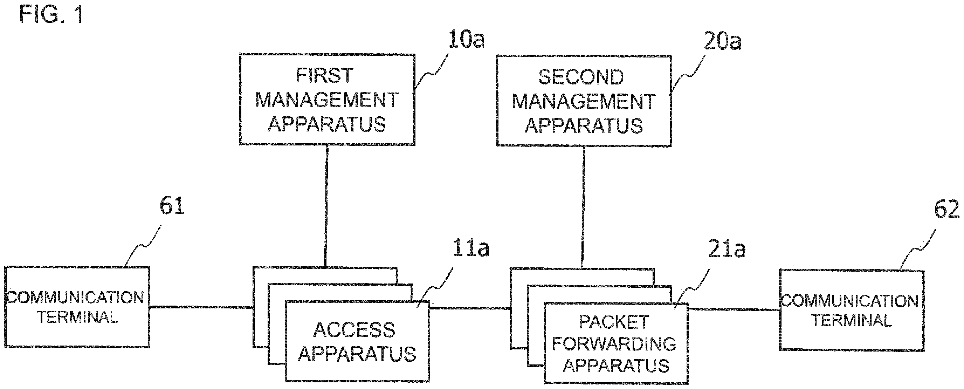

First, an outline of an exemplary embodiment of the present invention will be described with reference to a drawing. In the following outline, various components are denoted by reference characters for the sake of convenience. Namely, the following reference characters are merely used as examples to facilitate understanding of the present invention. Thus, the present invention is not limited to the illustrated examples. As illustrated in Fig. 1, an exemplary embodiment of the present invention can be realized by a configuration including at least one access apparatus 11a accessed by communication terminals 61, at least one packet forwarding apparatus 21a forwarding packets via the access apparatus 11a, a first management apparatus 10a, and a second management apparatus 20a.

More specifically, the first management apparatus 10a controls operation modes relating to energy consumption of the access apparatus 11a, based on a state thereof. Examples of the state include the number of communication terminals 61 connected to the access apparatus 11a, the traffic amount flowing through the access apparatus 11a, or the strengths of radio waves received from neighboring access apparatuses.

The second management apparatus 20a controls operation modes relating to energy consumption of the packet forwarding apparatus 21a, based on a change detected by the first management apparatus 10a in the operation modes relating to energy consumption of the access apparatus 11a.

For example, when an access apparatus 11a is switched to an energy saving state, the second management apparatus 20a switches the operation mode of a packet forwarding apparatus 21a, which has been providing this access apparatus 11a with connectivity, from a non energy saving state to an energy saving state.

In this way, as compared with the case where only a single access apparatus 11a is switched to the energy saving state, the present invention can save more energy consumption by the amount of energy saved by the packet forwarding apparatus 21a.

### [First exemplary embodiment]

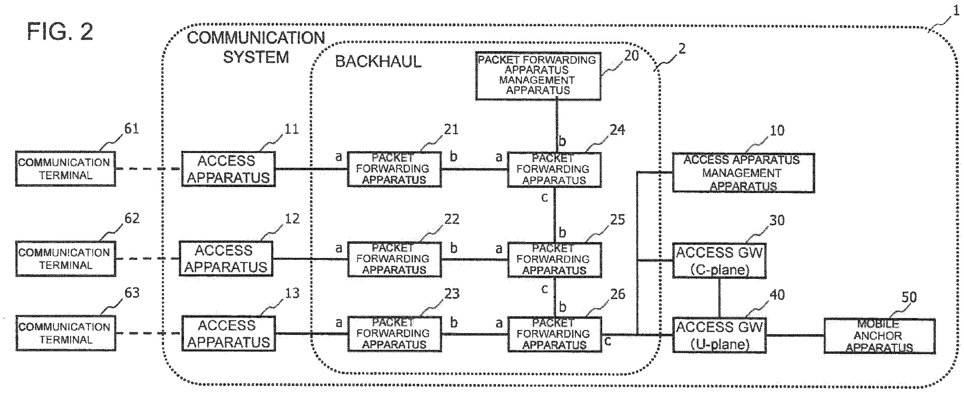

Next, a first exemplary embodiment of the present invention will be described in detail with reference to the drawings. Fig. 2 is a block diagram illustrating a configuration according to the first exemplary embodiment of the present invention. Fig. 2 illustrates a configuration of a communication system 1 for providing communication terminals 61 to 63 with services. In Fig. 2, some pairs of the components according to the present exemplary embodiment are connected by solid lines while other pairs are connected by dashed lines. The dashed lines indicate wireless connection and the solid lines indicate wired connection.

The communication system 1 includes a backhaul 2, an access apparatus management apparatus 10, access apparatuses 11 to 13, an access gateway (C-plane) (hereinafter referred to as "an access GW(C-plane)") 30, an access gateway (U-plane) (hereinafter referred to as "an access GW(U-plane)") 40, and a mobile anchor apparatus 50.

In addition, the backhaul 2 includes a packet forwarding apparatus management apparatus 20 and packet forwarding apparatuses 21 to 26. In Fig. 2, lower case letters in English attached to the packet forwarding apparatuses are identifiers for identifying corresponding interfaces.

The access apparatuses 11 to 13 are apparatuses for providing the communication terminals 61 to 63 with connectivity to the communication system 1 by using a radio access method. Each of the access apparatuses 11 to 13 can be realized by a configuration equivalent to that of an eNodeB in "General Packet Radio Service (GPRS) enhancements for Evolved Universal Terrestrial Radio Access Network (E-UTRAN) access,".

When any one of the packet forwarding apparatuses 21 to 26 receives a packet, that packet forwarding apparatus searches a packet forwarding rule table storing packet forwarding rules for a packet forwarding rule having a matching key matching the received packet and processes the packet in accordance with an action associated with the packet forwarding rule (for example, forwarding to a certain port, flooding, discarding, etc.). Each of the packet forwarding apparatuses 21 to 26 can be realized by a configuration equivalent to that of an OpenFlow switch in "OpenFlow Switch Specification" Version 1.0.0. (Wire Protocol 0x01), [online], [searched on April 14, 2011], Internet <URL:http://www.openflowswitch.org/documents/openflow-spec-v1.0.0.pdf>.

The access GW(C-plane) 30 is a control apparatus for performing control operations so that the communication terminals 61 to 63 receive mobile services via the access apparatuses 11 to 13. Examples of such control operations include an authentication operation and a handover operation between access apparatuses. The access GW(C-plane) 30 can be realized by a configuration equivalent to that of the MME in "General Packet Radio Service (GPRS) enhancements for Evolved Universal Terrestrial Radio Access Network (E-UTRAN) access,".

The access GW(U-plane) 40 provides a bearer serving as a communication path in which communication terminals perform data communication. To provide the bearer, the access GW(U-plane) 40 establishes a packet forwarding tunnel with the access apparatuses 11 to 13 and the mobile anchor apparatus 50. The access GW(U-plane) 40 can be realized by a configuration equivalent to that of the Serving GW in "General Packet Radio Service (GPRS) enhancements for Evolved Universal Terrestrial Radio Access Network (E-UTRAN) access,".

The mobile anchor apparatus 50 is a mobile anchor for terminating a bearer serving as a communication path in which communication terminals perform packet communication. To provide the bearer, the mobile anchor apparatus 50 establishes a packet forwarding tunnel with the access GW(U-plane) 40. The mobile anchor apparatus 50 can be realized by a configuration equivalent to that of the PDN GW in "General Packet Radio Service (GPRS) enhancements for Evolved Universal Terrestrial Radio Access Network (E-UTRAN) access,".

The access apparatus management apparatus 10 manages the access apparatuses 11 to 13 and corresponds to the above first management apparatus 10a.

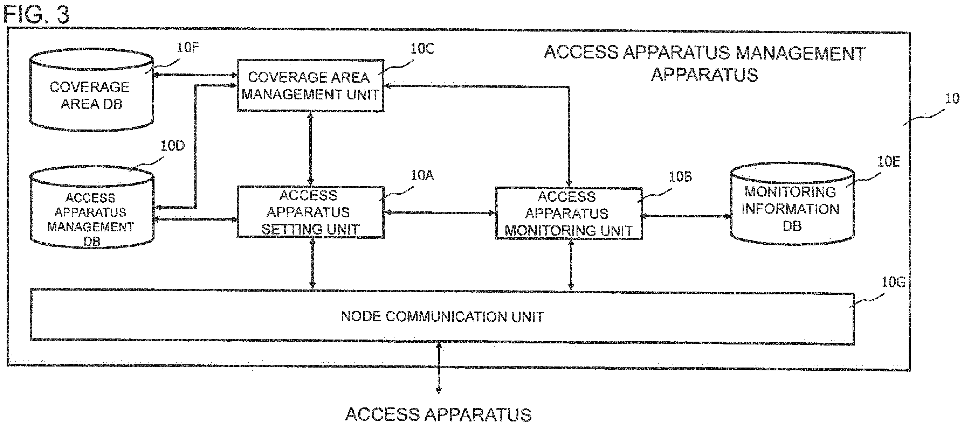

Fig. 3 illustrates a detailed configuration of the access apparatus management apparatus 10. In Fig. 3, the access apparatus management apparatus 10 includes an access apparatus setting unit 10A, an access apparatus monitoring unit 10B, a coverage area management unit 10C, an access apparatus management database (a database will hereinafter be referred to as "a DB") 10D, a monitoring information DB 10E, a coverage area DB 10F, and a node communication unit 10G communicating with the access apparatuses 11 to 13.

The access apparatus setting unit 10A is a processing block that sets access apparatuses when a new access apparatus is installed or when operation modes of an access apparatus is changed (between an energy saving mode and a non energy saving mode). Hereinafter, change of the operation modes will simply be referred to as "a mode change." In addition, the access apparatus setting unit 10A registers content set in the access apparatuses in the access apparatus management DB 10D. In addition, when an access apparatus undergoes a mode change, the access apparatus setting unit 10A notifies the packet forwarding apparatus management apparatus 20 of an identifier of the access apparatus. In the present exemplary embodiment, as the identifier of such access apparatus, a MAC address of the access apparatus is used. However, a different identifier may be used. For example, an IP address, a manufacturing number, or the like may be used as the identifier.

In addition, the names of "energy saving mode" and "non energy saving mode" do not need to be used explicitly. The present invention is applicable as long as the communication system uses a normal operation mode and a second operation mode in which reduction in energy consumption is achieved by stopping certain processing or a certain function.

The access apparatus monitoring unit 10B is a processing block for monitoring the number of communication terminals connected to each of the access apparatuses 11 to 13 or the traffic amounts flowing through each of the access apparatuses 11 to 13, for example. In addition, the access apparatus monitoring unit 10B registers the acquired monitoring information about the access apparatuses 11 to 13 in the monitoring information DB 10E.

The coverage area management unit 10C is a processing block for re-calculating an area coverage structure in response to addition/deletion of an access apparatus or to change in a surrounding environment and for determining the transmission radio wave of or use frequency of each access apparatus. In addition, the coverage area management unit 10C functions with the access apparatus monitoring unit 10B and regularly acquires, for example, the number of communication terminals connected to each access apparatus and the traffic amount flowing through each access apparatuses. If the coverage area management unit 10C detects a large change of the traffic amount in the communication system 1, the coverage area management unit 10C calculates an area coverage structure that can accommodate the current traffic amount and determines an access apparatus that needs to undergo a mode change (between the energy saving mode and the non energy saving mode).

The access apparatus management DB 10D manages information about settings and positions of the access apparatuses.

The monitoring information DB 10E manages the monitoring information acquired from the access apparatuses 11 to 13.

The coverage area DB 10F manages information about coverage areas and stores a radio wave coverage status per area.

The above access apparatus management apparatus 10 can be realized by adding a function of notifying the packet forwarding apparatus management apparatus 20 of an identifier of an access apparatus that needs to undergo a mode change to an Equipment Management Server (EMS) or a Self Organizing Network (SON) server for access apparatuses such as eNodeBs.

The packet forwarding apparatus management apparatus 20 manages the packet forwarding apparatuses 21 to 26 and corresponds to the above second management apparatus 20a.

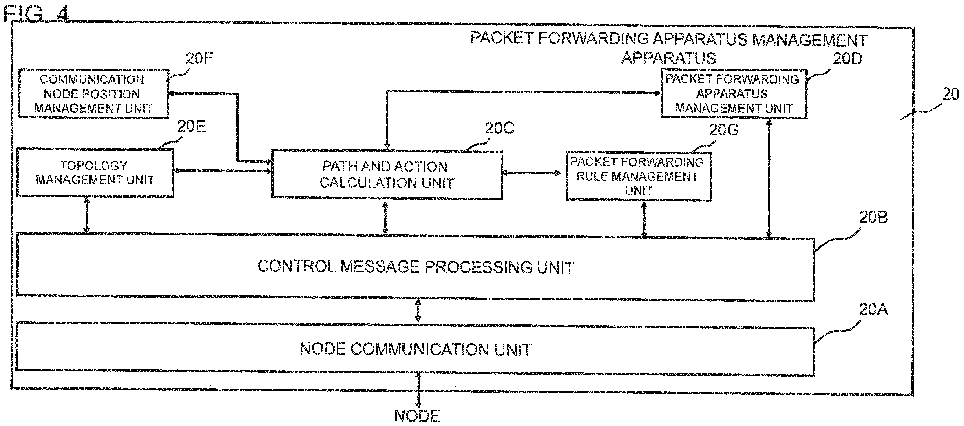

Fig. 4 illustrates a detailed configuration of the packet forwarding apparatus management apparatus 20. In Fig. 4, the packet forwarding apparatus management apparatus 20 includes a node communication unit 20A communicating with the packet forwarding apparatuses 21 to 26, a control message processing unit 20B, a path and action calculation unit 20C, a packet forwarding apparatus management unit 20D, a topology management unit 20E, a communication node position management unit 20F, and a packet forwarding rule management unit 20G. These components operate as follows.

The control message processing unit 20B analyzes control messages received from the packet forwarding apparatuses 21 to 26 and transmits information about the control messages to corresponding processing means in the packet forwarding apparatus management apparatus 20.

The path and action calculation unit 20C serves as a function of calculating a packet forwarding path on the basis of communication node position information managed by the communication node position management unit 20F and topology information managed by the topology management unit 20E. In addition, the path and action calculation unit 20C also serves as a function of determining actions that the packet forwarding apparatuses 21 to 26 are instructed to perform. In addition, when receiving a notification of a mode change of any one of the access apparatuses 11 to 13 from the access apparatus management apparatus 10, the path and action calculation unit 20C serves as means for determining a packet forwarding apparatus(es) that needs to undergo a mode change based on communication node position information managed by the communication node position management unit 20F and topology information managed by the topology management unit 20E. In addition, the path and action calculation unit 20C serves as a means (range determination means) of changing the mode change range of the packet forwarding apparatus(es) (interfaces, etc.) and means for changing modes of the packet forwarding apparatus(es).

The packet forwarding apparatus management unit 20D manages capabilities (for example, the number of ports, the types of the ports, and the types of supported actions) of the packet forwarding apparatuses 21 to 26 controlled by the packet forwarding apparatus management apparatus 20.

The topology management unit 20E establishes network topology information, based on a connection relationship among the packet forwarding apparatuses 21 to 26 collected via the node communication unit 20A. In addition, when detecting a change in the topology information, the topology management unit 20E notifies the path and action calculation unit 20C of the change.

The communication node position management unit 20F manages information for determining the positions of the communication nodes connected to the communication system. In the present exemplary embodiment, a MAC address is used as information for identifying a communication node. In addition, information for identifying a packet forwarding apparatus to which the communication node is connected and information about a corresponding port of the packet forwarding apparatus is used as information for determining the position of the communication node. However, alternatively, other information may be used. The "communication node" according to the present exemplary embodiment corresponds to the access apparatus management apparatus 10, each of the access apparatuses 11 to 13, the access GW function (C-plane) 30, the access GW function (U-plane) 40, etc.

The packet forwarding rule management unit 20G manages packet forwarding rules set in the packet forwarding apparatuses. More specifically, the packet forwarding rule management unit 20G stores results calculated by the path and action calculation unit 20C, as packet forwarding rules. When notified by any one of the packet forwarding apparatuses 21 to 26 of deletion of a packet forwarding rule, that is, when a packet forwarding rule set in the packet forwarding apparatus is changed, the packet forwarding rule management unit 20G updates the packet forwarding rule information stored therein.

The packet forwarding apparatus management apparatus 20 can be realized by adding means for determining a packet forwarding apparatus(es) that needs to undergo a mode change, means for determining the mode change range (interface, etc.) of the packet forwarding apparatus(es), and means for changing the mode of the packet forwarding apparatus(es) to the path and action calculation unit 20C, on the basis of the OpenFlow controller in the "OpenFlow Switch Specification".

In addition, each processing block of the access apparatus management apparatus 10 and the packet forwarding apparatus management apparatus 20 illustrated in Figs. 3 and 4 can be realized by a computer program causing a computer included in a corresponding one of the apparatuses to use its hardware and to execute each of the above corresponding processing.

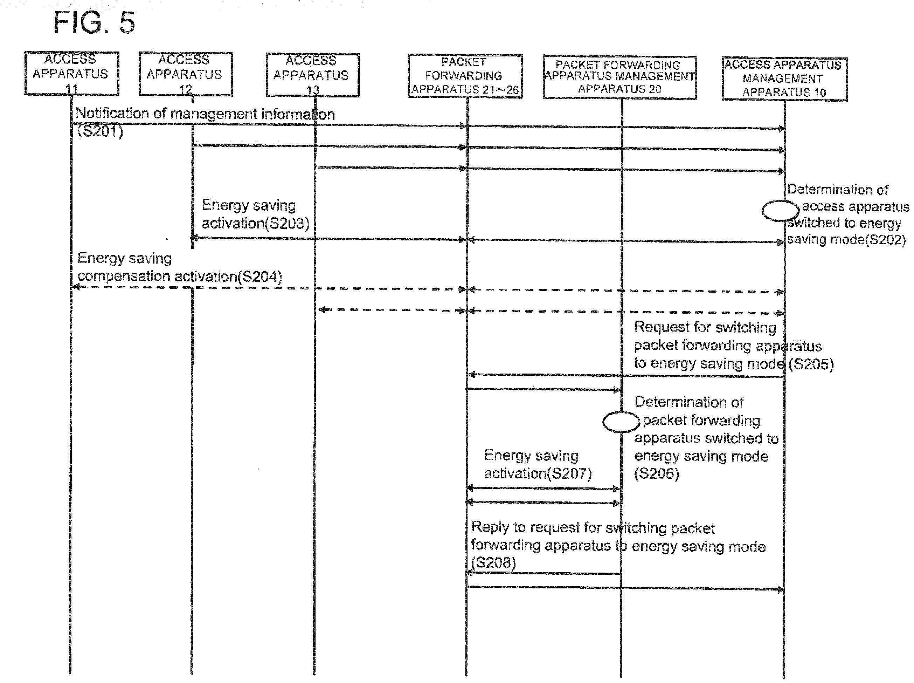

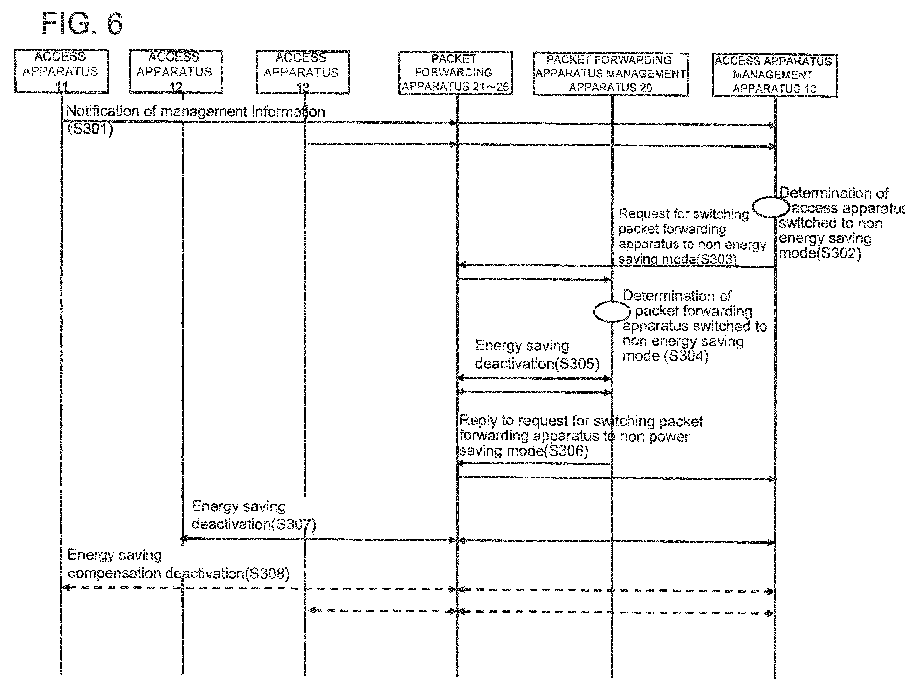

Next, an overall operation according to the present exemplary embodiment will be described in detail with reference to the drawings. Figs. 5 and 6 are sequence diagrams illustrating operations according to the first exemplary embodiment of the present invention. Fig. 5 illustrates an operation of energy saving of an access apparatus and packet forwarding apparatuses performed when the traffic amount flowing through the communication system 1 is decreased. In addition, each dashed line with arrows in Fig. 5 indicates a step performed as needed.

As illustrated in Fig. 5, the access apparatus management apparatus 10 regularly acquires information (management information) stored in the access apparatuses from the access apparatuses 11 to 13 (S201 in Fig. 5). The information includes the number of communication terminals connected to each access apparatus, the traffic amount flowing through each access apparatus, and the strengths of radio waves received from neighboring access apparatuses, for example.

When acquiring the information from the access apparatuses 11 to 13, the access apparatus management apparatus 10 detects a decrease in the traffic amount flowing through the communication system 1. Next, based on the coverage area of each of the access apparatuses 11 to 13 and the traffic amount flowing through each of the access apparatuses 11 to 13, the access apparatus management apparatus 10 determines an access apparatus that needs to be switched to the energy saving mode (S202 in Fig. 5). This following description will be made assuming that the access apparatus management apparatus 10 determines that the access apparatus 12 needs to be switched to the energy saving mode.

Next, to switch the access apparatus 12 to the energy saving mode, the access apparatus management apparatus 10 performs a step for Energy saving activation (S203 in Fig. 5). In this step, if switching of the access apparatus 12 to the energy saving mode causes a hole in the coverage area, Energy saving compensation activation may be performed to change the transmission power of the access apparatuses 11 and 13, which are neighboring access apparatuses of the access apparatus 12 (S204 in Fig. 5).

If the step for Energy saving activation is performed, the access apparatus 12 is switched to the energy saving mode. When the step for Energy saving activation is performed, if any communication terminal connected to the access apparatus 12 exists, the access apparatus 12 hands over such communication terminal to a neighboring access apparatus.

Next, the access apparatus management apparatus 10 transmits a request for switching a packet forwarding apparatus(es) to the energy saving mode to the packet forwarding apparatus management apparatus 20 (S205 in Fig. 5). This request for switching a packet forwarding apparatus(es) to the energy saving mode includes the MAC address of the access apparatus 12, which is an identifier of the access apparatus.

When receiving the request for switching a packet forwarding apparatus(es) to the energy saving mode, first, the packet forwarding apparatus management apparatus 20 determines the connection position of the energy-saving access apparatus 12, based on the MAC address of the access apparatus 12 included in the request for switching a packet forwarding apparatus(es) to the energy saving mode and the position information managed by the communication node position management unit 20F. Next, based on the topology information managed by the topology management unit 20E and the packet forwarding rule information managed by the packet forwarding rule management unit 20G, the packet forwarding apparatus management apparatus 20 determines a packet forwarding apparatus(es) that can be switched to the energy saving mode when the access apparatus 12 stops communication and the range of energy saving (S206 in Fig. 5).

From the configuration in Fig. 2, it is seen that the entire packet forwarding apparatus 22 and the interface a of the packet forwarding apparatus 25 can be switched to the energy saving mode when the access apparatus 12 is switched to the energy saving mode. Next, to switch the packet forwarding apparatuses 22 and 25 to the energy saving mode, the packet forwarding apparatus management apparatus 20 performs a step for Energy saving activation (S207 in Fig. 5). If the step for Energy saving activation is performed, the packet forwarding apparatus 22 and the interface a of the packet forwarding apparatus 25 are switched to the energy saving mode.

Upon completion of the step for Energy saving activation, the packet forwarding apparatus management apparatus 20 transmits a reply to the request for switching a packet forwarding apparatus(es) to the energy saving mode to the access apparatus management apparatus 10 (S208 in Fig. 5).

Fig. 6 illustrates an operation of switching the access apparatus and packet forwarding apparatuses, which have been in the energy saving mode in accordance with the operation in Fig. 5, back to the non energy saving mode, when the traffic amount flowing into the communication system 1 is increased. In addition, each dashed line with arrows in Fig. 6 indicates a procedure performed as needed.

As illustrated in Fig. 6, the access apparatus management apparatus 10 regularly acquires information stored in the access apparatuses from the access apparatuses 11 and 13 (S301 in Fig. 6). The information includes the number of communication terminals connected to each access apparatus, the traffic amount flowing through each access apparatus, and the strengths of radio waves received from neighboring access apparatuses, for example.

When receiving the information from the access apparatuses 11 and 13, the access apparatus management apparatus 10 detects an increase in the traffic amount flowing through the communication system 1. From the traffic amount flowing through the coverage area of each access apparatus, the access apparatus management apparatus 10 determines an access apparatus that needs to be switched to the non energy saving mode (S302 in Fig. 6). The following description will be made assuming that the access apparatus management apparatus 10 determines that the access apparatus 12 needs to be switched to the non energy saving mode.

Next, to enable communication with the access apparatus 12, the access apparatus management apparatus 10 transmits a request for switching a packet forwarding apparatus(es) to the non energy saving mode to the packet forwarding apparatus management apparatus 20 (S303 in Fig. 6). The request for switching a packet forwarding apparatus(es) to the non energy saving mode includes the MAC address of the access apparatus 12, which is an identifier of the access apparatus.

When receiving the request for switching a packet forwarding apparatus(es) to the non energy saving mode, the packet forwarding apparatus management apparatus 20 determines the connection position of the access apparatus 12, which is to be switched to the non energy saving mode, based on the MAC address of the access apparatus 12 included in the request for switching a packet forwarding apparatus(es) to the non energy saving mode and the position information managed by the communication node position management unit 20F. Next, based on the topology information managed by the topology management unit 20E and the packet forwarding rule information managed by the packet forwarding rule management unit 20G, the packet forwarding apparatus management apparatus 20 determines a packet forwarding apparatus(es) that needs to be switched to the non energy saving mode when the access apparatus 12 starts communication and the range of non energy saving (S304 in Fig. 6).

From the configuration in Fig. 2, it is seen that the entire packet forwarding apparatus 22 and the interface a of the packet forwarding apparatus 25 need to be switched to the non energy saving mode when the access apparatus 12 is returned to the non energy saving mode from the energy saving mode. Next, to switch the packet forwarding apparatuses 22 and 25 to the non energy saving mode, the packet forwarding apparatus management apparatus 20 performs a step for Energy saving deactivation (S305 in Fig. 6). If the step for Energy saving deactivation is performed, the packet forwarding apparatuses 22 and the interface a of the packet forwarding apparatus 25 are switched to the non energy saving mode.

Upon completion of the step for Energy saving deactivation, the packet forwarding apparatus management apparatus 20 transmits a reply to the request for switching a packet forwarding apparatus(es) to the non energy saving mode to the access apparatus management apparatus 10 (S306 in Fig. 6).

When receiving the reply to the request for switching a packet forwarding apparatus(es) to the non energy saving mode, the access apparatus management apparatus 10 performs the step for Energy saving deactivation to switch the access apparatus 12 to the non energy saving mode (S307 in Fig. 6). When switching the access apparatus 12 to the non energy saving mode, if transmission power of the access apparatuses 11 and 13, which are neighboring packet forwarding apparatuses, needs to be changed, Energy saving compensation deactivation is performed (S308 in Fig. 6).

Thus, according to the present exemplary embodiment, when the mode of an access apparatus is changed, the mode of a packet forwarding apparatus(es) is also changed. In this way, as compared with the case where only a single access apparatus undergoes a mode change, more energy amount can be saved.

In the present exemplary embodiment, the packet forwarding apparatus management apparatus 20 uses, as information for determining the position of a communication node, information for identifying a packet forwarding apparatus to which the communication node is connected and information about a corresponding port of the packet forwarding apparatus. With the configuration in Fig. 2, a single packet forwarding apparatus is connected to a single interface of a packet forwarding apparatus. However, alternatively, a plurality of packet forwarding apparatuses may be connected to a single interface of a packet forwarding apparatus via a hub or the like. In such case, too, the packet forwarding apparatus management apparatus 20 can accurately grasp the connected packet forwarding apparatuses. In addition, even if one of the plurality of packet forwarding apparatuses connected to a single interface of a certain packet forwarding apparatus is switched to the energy saving mode, the packet forwarding apparatus management apparatus 20 does not erroneously switch the interface of the certain packet forwarding apparatus to the energy saving mode.

### [Second exemplary embodiment]

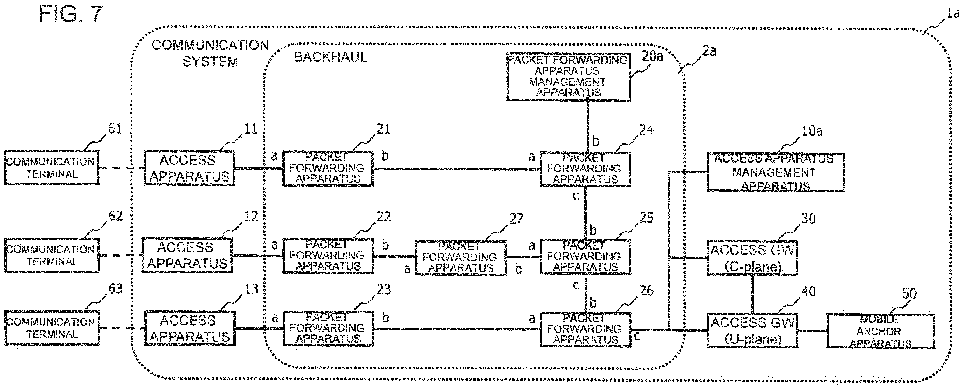

Next, a second exemplary embodiment of the present invention will be described in detail with reference to the drawings. In the second exemplary embodiment, the access apparatus management apparatus is changed. Fig. 7 is a block diagram illustrating a configuration according to the second exemplary embodiment of the present invention. The second exemplary embodiment differs from the first exemplary embodiment illustrated in Fig. 2 in that a packet forwarding apparatus 27 is added between the packet forwarding apparatuses 22 and 25 in a backhaul 2a and the access apparatus management apparatus 10 and the packet forwarding apparatus management apparatus 20 are replaced by an access apparatus management apparatus 10a and a packet forwarding apparatus management apparatus 20a, respectively. The following description will be made with a focus on the difference from the first exemplary embodiment.

The access apparatus management apparatus 10a manages the access apparatuses 11 to 13. Since basic functions of the access apparatus management apparatus 10a are similar to those according to the first exemplary embodiment, detailed description thereof will be omitted. However, the access apparatus management apparatus 10a considers the energy amount of a packet forwarding function(s) that changes in conjunction with an access apparatus that needs to undergo a mode change.

The above access apparatus management apparatus 10 can be realized by adding means for determining an access apparatus that undergoes a mode change relating to energy consumption in view of the energy amount of a transporting apparatus(es) that changes in conjunction to an Equipment Management Server (EMS) or a Self Organizing Network (SON) server for access apparatuses such as eNodeBs.

In addition, the packet forwarding apparatus management apparatus 20a according to the present exemplary embodiment is realized by adding a function of replying to a request for switching a packet forwarding apparatus(es) to the energy saving mode from the access apparatus management apparatus 10a to the packet forwarding apparatus management apparatus 20 according to the above first exemplary embodiment. Since other entities are the same as those of according to the first exemplary embodiment, description thereof will be omitted.

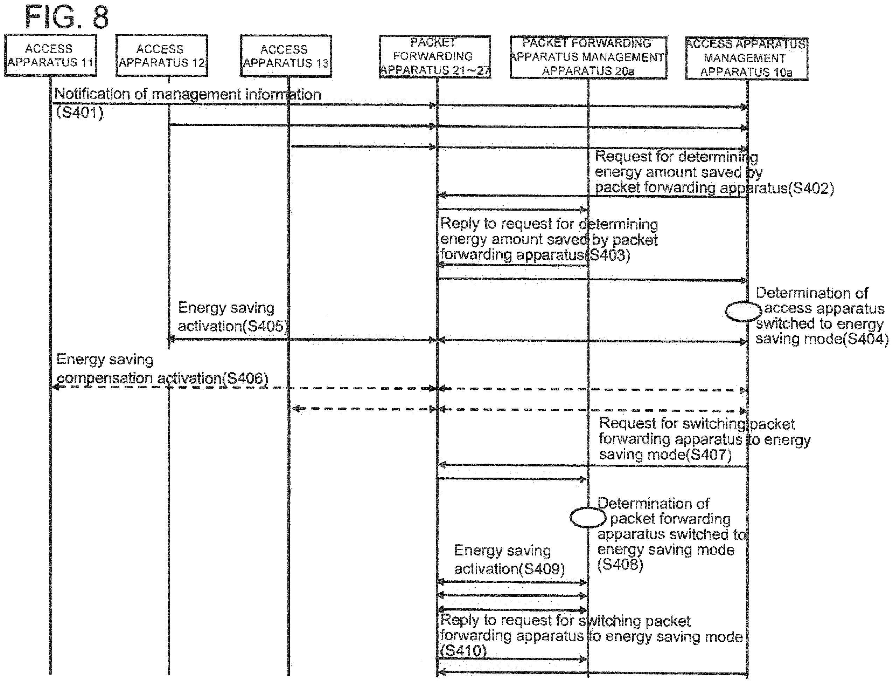

Next, an operation according to the present exemplary embodiment will be described in detail with reference to the drawings. Fig. 8 is a sequence diagram illustrating an operation according to the second exemplary embodiment of the present invention. As in Fig. 5, Fig. 8 illustrates an operation of energy saving of an access apparatus and packet forwarding apparatuses performed when the traffic amount flowing into the communication system 1 is decreased.

As illustrated in Fig. 8, when acquiring the information from the access apparatuses 11 to 13 (S401 in Fig. 8), the access apparatus management apparatus 10a detects a decrease in the traffic amount flowing through the communication system 1. Next, to grasp the energy amounts that can be saved by the respective packet forwarding apparatuses when each of the access apparatuses 11 to 13 is switched to the energy saving mode, the access apparatus management apparatus 10a transmits a request for determining the energy amounts saved by the respective packet forwarding apparatuses to the packet forwarding apparatus management apparatus 20a (402 in Fig. 8).

When receiving the request for determining the energy amounts saved by the respective packet forwarding apparatuses, the packet forwarding apparatus management apparatus 20a calculates the energy amounts saved by the respective packet forwarding apparatuses when each one of the access apparatuses 11 to 13 is switched to the energy saving mode. For example, with the configuration in Fig. 7, if the access apparatus 11 or the access apparatus 13 are switched to the energy saving mode, the packet forwarding apparatus management apparatus 20a determines that energy saving can be achieved by a single packet forwarding apparatus (21 or 23) and a single interface (the interface a of the packet forwarding apparatus 24 or the interface a of the packet forwarding apparatus 26). In contrast, with the configuration in Fig. 8, if the access apparatus 12 is switched to the energy saving mode, the packet forwarding apparatus management apparatus 20a determines that energy saving can be achieved by two packet forwarding apparatuses (22 and 27) and a single interface (25a). Next, the packet forwarding apparatus management apparatus 20a transmits a reply to the request for determining the energy amounts saved by the respective packet forwarding apparatuses, the reply including the above calculation results, to the access apparatus management apparatus 10a (S403 in Fig. 8).

When receiving the reply to the request for determining the energy amounts saved by the respective packet forwarding apparatuses, the access apparatus management apparatus 10a determines an access apparatus that needs to be switched to the energy saving mode, in view of the coverage area and the traffic amount flowing through each access apparatus, the energy amounts that can accordingly be saved by the respective packet forwarding apparatuses, and the increased energy amounts of neighboring access apparatuses. The following description will be made assuming that the access apparatus management apparatus 10a determines that the access apparatus 12 needs to be switched to the energy saving mode.

Since the subsequent procedures are the same as those according to the first exemplary embodiment, description thereof will be omitted.

As described above, according to the present exemplary embodiment, in addition to the above advantageous effects according to the first exemplary embodiment, when determining an access apparatus that needs to undergo a mode change, the access apparatus management apparatus 10a considers the energy amounts of the packet forwarding apparatuses that accordingly change. Thus, it is possible to select an access apparatus and a packet forwarding apparatus with which the maximum energy saving amount can be achieved.

While exemplary embodiments of the present invention have thus been described, the present invention is not limited thereto. Further variation, substitutions, or adjustments can be made without departing from the basic technical concept of the present invention. For example, the above exemplary embodiments have been described assuming that the access apparatus management apparatus 10(10a) and the packet forwarding apparatus management apparatus 20(20a) are arranged separately. However, alternatively, these apparatuses may be integrated as needed.

In addition, the above exemplary embodiments have been described assuming that the mode of an access apparatus is changed in view of a state thereof such as a traffic amount flowing therethrough. However, alternatively, a different condition may be used to determine whether to change the mode of an access apparatus. For example, the access apparatus management apparatus may change the mode of an access apparatus, based on an access apparatus management schedule. For example, the schedule indicates that a certain access apparatus needs to be switched to the energy saving mode from 2:00 a.m. to 7:00 a.m.

In addition, the above exemplary embodiments have been described assuming that all the interfaces included in the packet forwarding apparatuses are wired interfaces. However, alternatively, the interfaces may be wireless interfaces.

In addition, the above exemplary embodiments have been described assuming that the communication nodes are directly connected to the backhaul. However, alternatively, the communication nodes may be connected to the backhaul via apparatuses (routers, L2 switches, etc.) that are not managed by the packet forwarding apparatus management apparatus.

In addition, the above exemplary embodiments have been described assuming that, when the mode of a packet forwarding apparatus is changed, packet forwarding rules of the packet forwarding apparatus are always maintained. However, alternatively, when the packet forwarding apparatus is switched to the energy saving mode, the packet forwarding apparatus management apparatus may control the packet forwarding apparatus to release the packet forwarding rules. In such case, along with the step for Energy saving (de)activation of a packet forwarding apparatus, processing for updating the packet forwarding rules may be performed.

In addition, the above exemplary embodiments have been described assuming that, when a packet forwarding apparatus undergoes a mode change, packet forwarding paths for communication relating to communication nodes that do not undergo a mode change are maintained. However, alternatively, to switch as many packet forwarding apparatuses as possible to the energy saving mode, the packet forwarding apparatus management apparatus may change the above packet forwarding paths at the time of a mode change. In such case, along with the step for Energy saving (de)activation, processing for updating the packet forwarding rules for communication among communication nodes that do not undergo a mode change may be performed. In addition, in such case, in addition to the communication node position information and topology information, based on the packet forwarding rules set for controlling the packet forwarding apparatuses, the packet forwarding apparatus management apparatus can determine the range of packet forwarding apparatuses that undergo a mode change.

In addition, the above exemplary embodiments have been described assuming that the access apparatuses provide a wireless access method. However, alternatively, the access method of the access apparatuses is not limited to a certain wireless method such as LTE or WiMAX. Other than such wireless methods, a fixed type method may be used such as optical fiber and ADSL (Asymmetric Digital Subscriber Line).

Finally, preferable modes of the present invention will be summarized.

### REFERENCE SIGNS LIST

1, 1a communication system
2, 2a backhaul
10, 10a access apparatus management apparatus (first management apparatus)
10A access apparatus setting unit
10B access apparatus monitoring unit
10C coverage area management unit
10D access apparatus management database (DB)
10E monitoring information database (DB)
10F coverage area database (DB)
10G node communication unit
11 to 13 access apparatus
20, 20a packet forwarding apparatus management apparatus (second management apparatus)
20A node communication unit
20B control message processing unit
20C path and action calculation unit
20D packet forwarding apparatus management unit
20E topology management unit
20F communication node position management unit
20G packet forwarding rule management unit
21 to 27 packet forwarding apparatus
30 access gateway (GW) apparatus (C-plane)
40 access GW apparatus (U-plane)
50 mobile anchor apparatus
61 to 63 communication terminal
110 Equipment Management Server (eNodeB) (EMS(eNodeB))
111 to 113 E-UTRAN NodeB (eNodeB)
120 Equipment Management Server (Backhaul) (EMS(BH))
121 to 126 router
130 Mobility Management Entity (MME)
140 Serving GW
150 Packet Data Network Gateway (PDN-GW)

## Claims

1. A communication system, comprising:
an access apparatus(es) (11, 12, 13) accessed by communication terminals (61, 62, 63);
a packet forwarding apparatus(es) (21 to 26) forwarding packets according to a packet handling rule via the access apparatus(es) (11, 12, 13);
a first management apparatus (10) controlling operation modes relating to energy consumption of the access apparatus(es) (11, 12 13); and
a second management apparatus (20) setting the packet handling rule to the packet forwarding apparatus(es) and controlling operation modes relating to energy consumption of the packet forwarding apparatus(es) (21 to 26) based on a change of the operation modes relating to the energy consumption of the access apparatus(es).

2. The communication system according to claim 1, wherein the first management apparatus comprises (10):
means (10B) for determining whether to change the operation modes relating to the energy consumption of the access apparatus(es) (11, 12, 13) based on a state of the access apparatus(es);
means (10A) for changing the operation modes relating to the energy consumption of the access apparatus(es) (11, 12, 13) in accordance with the determination; and
means (10G) for notifying the second management apparatus (20) of an access apparatus(es) that has undergone a change of the operation modes relating to the energy consumption.

3. The communication system according to claim 2, wherein the second management apparatus (20) comprises:
means (20A, 20B) for determining a packet forwarding apparatus(es) (21 to 26) that is caused to undergo a change of the operation modes relating to the energy consumption based on an access apparatus(es) (11, 12, 13) that the second management apparatus (20) has been notified of by the first management apparatus (10) and that has undergone a change of the operation modes relating to the energy consumption; and
means for changing the operation modes relating to the energy consumption of the packet forwarding apparatus(es) (21 to 26) in accordance with the determination.

4. The communication system according to any one of claims 1 to 3, wherein the second management apparatus (20) further comprises range determination means (20C) for determining an operation mode change range of the packet forwarding apparatus(es) (21 to 26) that is caused to undergo the operation modes.

5. A first management apparatus (10), arranged in the communication system of claim 1, wherein the first management apparatus is configured to:
control operation modes relating to energy consumption of the access apparatus(es), and
cause the second management apparatus (20), setting the packet handling rule to the packet forwarding apparatus, to control operation modes relating to energy consumption of the packet forwarding apparatus(es) (21 to 26) based on a change of the operation modes relating to the energy consumption of the access apparatus(es) (11, 12, 13).

6. A second management apparatus (20), arranged in the communication system of claim 1, wherein the second management apparatus is configured to:
control operation modes relating to energy consumption of the packet forwarding apparatus(es) based on a change of the operation modes relating to the energy consumption of the access apparatus (11, 12, 13).

7. The second management apparatus (20C) according to claim 6, comprising:
means for determining a packet forwarding apparatus(es) that is caused to undergo a change of the operation modes relating to the energy consumption based on an access apparatus(es) that the second management apparatus has been notified of by the first management apparatus and that has undergone a change of the operation modes relating to the energy consumption; and
means for changing the operation modes relating to the energy consumption of the packet forwarding apparatus(es) in accordance with the determination.

8. The second management apparatus according to claim 6 or 7, further comprising:
range determination means (20C) for determining an operation mode change range of the packet forwarding apparatus(es) that is caused to undergo the operation modes.

9. A control method of operation modes of an access apparatus(es) accessed by communication terminals and of a packet forwarding apparatus(es) forwarding packets according to a packet handling rule via the access apparatus(es) included in a communication system, the control method comprising steps of:
controlling operation modes relating to energy consumption of the access apparatus(es); and
controlling operation modes relating to energy consumption of the packet forwarding apparatus(es) based on a change of the operation modes relating to the energy consumption of the access apparatus(es).

10. A computer program product comprising instructions which, when the program is executed by a computer, cause the computer to carry out the steps of the method of claim 9.

## Patentansprüche

1. Kommunikationssystem, umfassend:
(eine) Anschlussvorrichtung(en) (11, 12, 13), an die Kommunikationsendgeräte (61, 62, 63) angeschlossen werden;
(eine) Paketweiterleitungsvorrichtung(en) (21 bis 26), die Pakete gemäß einer Paketsteuerungsregel über die Anschlussvorrichtung(en) (11, 12, 13) weiterleitet bzw. weiterleiten;
eine erste Managementvorrichtung (10), die Betriebsarten in Bezug auf Energieverbrauch der Anschlussvorrichtung(en) (11, 12, 13) steuert; und
eine zweite Managementvorrichtung (20), die die Paketsteuerungsregel auf die Paketweiterleitungsvorrichtung(en) einstellt und die Betriebsarten in Bezug auf Energieverbrauch der Paketweiterleitungsvorrichtung(en) (21 bis 26) auf Basis einer Änderung der Betriebsarten in Bezug auf den Energieverbrauch der Anschlussvorrichtung(en) steuert.

2. Kommunikationssystem nach Anspruch 1, wobei die erste Managementvorrichtung (10) Folgendes umfasst:
ein Mittel (10B) zum Bestimmen auf Basis eines Zustands der Anschlussvorrichtung(en), ob die Betriebsarten in Bezug auf den Energieverbrauch der Anschlussvorrichtung(en) 11, 12, 13) zu ändern sind;
ein Mittel (10A) zum Ändern der Betriebsarten in Bezug auf den Energieverbrauch der Anschlussvorrichtung(en) (11, 12, 13) gemäß der Bestimmung; und
ein Mittel (10G) zum Benachrichtigen der zweiten Managementvorrichtung (20) über (eine) Anschlussvorrichtung(en), die eine Änderung der Betriebsarten in Bezug auf den Energieverbrauch durchlaufen hat bzw. haben.

3. Kommunikationssystem nach Anspruch 2, wobei die zweite Managementvorrichtung (20) Folgendes aufweist:
ein Mittel (20A, 20B) zum Bestimmen einer bzw. von Paketweiterleitungsvorrichtung(en) (21 bis 26), die zum Durchlaufen einer Änderung der Betriebsarten in Bezug auf den Energieverbrauch auf Basis einer bzw. von Anschlussvorrichtung(en) (11, 12, 13) veranlasst wird bzw. werden, über die die zweite Managementvorrichtung (20) durch die erste Managementvorrichtung (10) benachrichtigt wurde und die eine Änderung der Betriebsarten in Bezug auf den Energieverbrauch durchlaufen hat bzw. haben; und
ein Mittel zum Ändern der Betriebsarten in Bezug auf den Energieverbrauch der Paketweiterleitungsvorrichtung(en) (21 bis 26) gemäß der Bestimmung.

4. Kommunikationssystem nach einem der Ansprüche 1 bis 3, wobei die zweite Managementvorrichtung (20) ferner ein Bereichsbestimmungsmittel (20C) zum Bestimmen eines Betriebsartänderungsbereichs der Paketweiterleitungsvorrichtung(en) (21 bis 26) umfasst, die zum Durchlaufen der Betriebsarten veranlasst wird bzw. werden.

5. Erste Managementvorrichtung (10), die in dem Kommunikationssystem nach Anspruch 1 angeordnet ist, wobei die erste Managementvorrichtung konfiguriert ist zum:
Steuern von Betriebsarten in Bezug auf Energieverbrauch der Anschlussvorrichtung(en) und
Veranlassen der zweiten Managementvorrichtung (20), die die Paketsteuerungsregel auf die Paketweiterleitungsvorrichtung einstellt, zum Steuern von Betriebsarten in Bezug auf Energieverbrauch der Paketweiterleitungsvorrichtung(en) (21 bis 26) auf Basis einer Änderung der Betriebsarten in Bezug auf den Energieverbrauch der Anschlussvorrichtung(en) (11, 12, 13).

6. Zweite Managementvorrichtung (20), die in dem Kommunikationssystem nach Anspruch 1 angeordnet ist, wobei die zweite Managementvorrichtung konfiguriert ist zum:
Steuern von Betriebsarten in Bezug auf Energieverbrauch der Paketweiterleitungsvorrichtung(en) auf Basis einer Änderung der Betriebsarten in Bezug auf den Energieverbrauch der Anschlussvorrichtung(en) (11, 12, 13).

7. Zweite Managementvorrichtung (20C) nach Anspruch 6, umfassend:
ein Mittel zum Bestimmen einer bzw. von Paketweiterleitungsvorrichtung(en), die zum Durchlaufen einer Änderung der Betriebsarten in Bezug auf den Energieverbrauch auf Basis einer bzw. von Anschlussvorrichtung(en) veranlasst wird bzw. werden, über die die zweite Managementvorrichtung durch die erste Managementvorrichtung benachrichtigt wurde und die eine Änderung der Betriebsarten in Bezug auf den Energieverbrauch durchlaufen hat bzw. haben; und
ein Mittel zum Ändern der Betriebsarten in Bezug auf den Energieverbrauch der Paketweiterleitungsvorrichtung(en) gemäß der Bestimmung.

8. Zweite Managementvorrichtung nach Anspruch 6 oder 7, die ferner umfasst:
ein Bereichsbestimmungsmittel (20C) zum Bestimmen eines Betriebsartänderungsbereichs der Paketweiterleitungsvorrichtung(en), die zum Durchlaufen der Betriebsarten veranlasst wird bzw. werden.

9. Verfahren zum Steuern von Betriebsarten von (einer) Anschlussvorrichtung(en), an die Kommunikationsendgeräte angeschlossen werden, und von (einer) Paketweiterleitungsvorrichtung(en), die Pakete gemäß einer Paketsteuerungsregel über die in einem Kommunikationssystem enthaltenen Anschlussvorrichtung(en) weiterleitet bzw. weiterleiten; wobei das Steuerverfahren die folgenden Schritte umfasst:
Steuern von Betriebsarten in Bezug auf Energieverbrauch der Anschlussvorrichtung(en) und
Steuern von Betriebsarten in Bezug auf Energieverbrauch der Paketweiterleitungsvorrichtung(en) auf Basis einer Änderung der Betriebsarten in Bezug auf den Energieverbrauch der Anschlussvorrichtung(en).

10. Computerprogrammprodukt, das Anweisungen umfasst, die bei Ausführung durch einen Rechner den Rechner zum Durchführen der Schritte des Verfahrens nach Anspruch 9 veranlassen.

## Revendications

1. Système de communication, comprenant :
un/des appareil(s) d'accès (11, 12, 13) accédé(s) par des terminaux de communication (61, 62, 63) ;
un/des appareil(s) d'acheminement de paquets (21 à 26) acheminant des paquets conformément à une règle de prise en charge de paquets par le(s) appareil(s) d'accès (11, 12, 13) ;
un premier appareil de gestion (10) commandant des modes de fonctionnement se rapportant à la consommation en énergie du/des appareil(s) d'accès (11, 12, 13) ; et
un deuxième appareil de gestion (20) réglant la règle de prise en charge de paquets à l'appareil/aux appareils d'acheminement de paquets et commandant des modes de fonctionnement se rapportant à la consommation en énergie de l'appareil/des appareils d'acheminement de paquets (21 à 26) sur la base d'un changement des modes de fonctionnement se rapportant à la consommation en énergie du/des appareil(s) d'accès.

2. Système de communication selon la revendication 1, dans lequel le premier appareil de gestion (10) comprend :
un moyen (10B) pour déterminer si changer les modes de fonctionnement se rapportant à la consommation en énergie du/des appareil(s) d'accès (11, 12, 13) sur la base d'un état du/des appareil(s) d'accès ;
un moyen (10A) pour changer les modes de fonctionnement se rapportant à la consommation en énergie du/des appareil(s) d'accès (11, 12, 13) conformément à la détermination ; et
un moyen (10G) pour notifier le deuxième appareil de gestion (20) d'un/des appareil(s) d'accès qui a subi un changement des modes de fonctionnement se rapportant à la consommation en énergie.

3. Système de communication selon la revendication 2, dans lequel le deuxième appareil de gestion (20) comprend :
un moyen (20A, 20B) pour déterminer un/des appareil(s) d'acheminement de paquets (21 à 26) qui est entraîné à subir un changement des modes de fonctionnement se rapportant à la consommation en énergie sur la base d'un/d'appareil(s) d'accès (11, 12, 13) dont le deuxième appareil de gestion (20) a été notifié par le premier appareil de gestion (10) et qui a subi un changement des modes de fonctionnement se rapportant à la consommation en énergie ; et
un moyen pour changer les modes de fonctionnement se rapportant à la consommation en énergie du/des appareil(s) d'acheminement de paquets (21 à 26) conformément à la détermination.

4. Système de communication selon l'une quelconque des revendications 1 à 3, dans lequel le deuxième appareil de gestion (20) comprend en outre un moyen de détermination de plage (20C) pour déterminer une plage de changement de mode de fonctionnement du/des appareil(s) d'acheminement de paquets (21 à 26) qui est entraîné à subir les modes de fonctionnement.

5. Premier appareil de gestion (10), disposé dans le système de communication selon la revendication 1, où le premier appareil de gestion est configuré pour :
commander des modes de fonctionnement se rapportant à la consommation en énergie du/des appareil(s) d'accès, et
faire que le deuxième appareil de gestion (20), réglant la règle de prise en charge de paquets à l'appareil d'acheminement de paquets, commande les modes de fonctionnement se rapportant à la consommation en énergie du/des appareil(s) d'acheminement de paquets (21 à 26) sur la base d'un changement des modes de fonctionnement se rapportant à la consommation en énergie du/des appareil(s) d'accès (11, 12, 13).

6. Deuxième appareil de gestion (20), disposé dans le système de communication selon la revendication 1, où le deuxième appareil de gestion est configuré pour :
commander des modes de fonctionnement se rapportant à la consommation en énergie du/des appareil(s) d'acheminement de paquets sur la base d'un changement des modes de fonctionnement se rapportant à la consommation en énergie de l'appareil d'accès (11, 12, 13).

7. Deuxième appareil de gestion (20C) selon la revendication 6, comprenant :
un moyen pour déterminer un/des appareil(s) d'acheminement de paquets qui est entraîné à subir un changement des modes de fonctionnement se rapportant à la consommation en énergie sur la base d'un/des appareil(s) d'accès dont le deuxième appareil de gestion a été notifié par le premier appareil de gestion et qui a subi un changement des modes de fonctionnement se rapportant à la consommation en énergie ; et
un moyen pour changer les modes de fonctionnement se rapportant à la consommation en énergie du/des appareil(s) d'acheminement de paquets conformément à la détermination.

8. Deuxième appareil de gestion selon la revendication 6 ou 7, comprenant en outre :
un moyen de détermination de plage (20C) pour déterminer une plage de changement de mode de fonctionnement du/des appareil(s) d'acheminement de paquets (21 à 26) qui est entraîné à subir les modes de fonctionnement.

9. Procédé de commande de modes de fonctionnement d'un/d'appareil(s) d'accès accédés par des terminaux de communication et d'un/d'appareil(s) d'acheminement de paquets acheminant des paquets conformément à une règle de prise en charge de paquets par le(s) appareil(s) d'accès inclus dans un système de communication, le procédé de commande comprenant les étapes consistant à :
commander des modes de fonctionnement se rapportant à la consommation en énergie du/des appareil(s) d'accès ; et
commander des modes de fonctionnement se rapportant à la consommation en énergie du/des appareil(s) d'acheminement de paquets sur la base d'un changement des modes de fonctionnement se rapportant à la consommation en énergie du/des appareil(s) d'accès.

10. Produit de programme informatique comprenant des instructions qui, lorsque le programme est exécuté par un ordinateur, font que l'ordinateur mette en oeuvre les étapes du procédé selon la revendication 9.
